Europäisches Patentamt

European Patent Office

Office européen des brevets

(11) Publication number: **0 084 923**
A1

# EUROPEAN PATENT APPLICATION

(21) Application number: 83300040.9

(22) Date of filing: **05.01.83**

(51) Int. Cl.³: **F 21 Q 1/00,** F 21 V 7/07

(30) Priority: **13.01.82 GB 8200927**

(43) Date of publication of application: **03.08.83**
Bulletin 83/31

(84) Designated Contracting States: **DE FR GB IT**

(71) Applicant: **Britax (P.M.G.) Limited, Bessingby Industrial Estate, Bridlington, North Humberside. Y016 4SJ (GB)**

(72) Inventor: **Rainbow Derek Arthur, Cedarwood North Frodingham, Driffield North Humberside (GB)**

(74) Representative: **Hollinghurst, Antony, Britax Central Services 40 Granby Avenue, Garretts Green Birmingham, B33 OSJ (GB)**

(54) **Signal lamps.**

(57) A beacon has a reflector (24) mounted with its optical axis horizontal on means (16) for rotating it about a vertical axis. The reflector (24) is of hyperbolic shape and the light source of a bulb (22) is located at the first focus thereof.

- 1 -

## Signal Lamps

The present invention relates to signal lamps and, more particularly, to a signal lamp having a reflector which is rotated about a vertical axis by an electric motor. Signal lamps of this type are commonly called beacons.

Such beacons are commonly mounted on emergency service vehicles such as police vehicles, fire service vehicles and ambulances and also on recovery vehicles, vehicles carrying abnormally wide loads and maintenance vehicles which may need to travel at very low speeds or to be parked at inconvenient locations. Such beacons must radiate a conspicuous beam of light over a specific angle range whereby, even in daylight, the beam attracts the attention of a road user not accidentally looking towards the beacon. To this end, the reflector is arranged to rotate about a vertical axis at a specific number of revolutions per minute and to radiate a concentrated beam of light so that, from any horizontal direction, an observer receives the impression that the beacon is emitting a beam of light flashing at specific successive intervals of time.

The reflectors of such beacons have commonly been of parabolic shape. However, when the filament of a light bulb is arranged at the focal point of a parabolic reflector, the beam of light reflected therefrom is not sufficiently diffused in the vertical direction to ensure compliance with some European standard specifications. Although greater diffusion of the beam of light could be obtained by defocusing the filament, the precise value of illumination intensity at each angle within the beam is critically dependent on the degree of defocusing and is therefore difficult to control.

In G.B. Specification No. 1326107 it has been proposed to replace the parabolic reflector of such a beacon with a reflector comprising a plurality of frustoconical surfaces arranged co-axially of the beacon axis with the edges of such surfaces located on a paraboloid. Such reflectors produce a divergent beam, the angle of divergence of which is determined by the widths and inclinations of the frustoconical surfaces. However, the need to provide a reflector with a number of such frustoconical surfaces, each separated from its neighbour by as sharp an angle as possible, complicates manufacture. The present invention is concerned with the provision of a beacon having a reflector with a smooth continuous surface which produces a beam of the required divergence.

According to the invention, a beacon has a reflector mounted, with its optical axis horizontal, on means for rotating it about a vertical axis, and a lamp bulb mounted with its light source on said optical axis, the reflector being of hyperbolic shape with the light source of the bulb located at the first focus thereof.

An embodiment of the invention will now be described, by way of example, with reference to the accompanying drawings, in which:

Figure 1 is an elevational view of a beacon in accordance with the invention, with the translucent cover thereof partly broken away to show the bulb and reflector,

Figure 2 is a cross-sectional view of the reflector of the beacon shown in Figure 1, taken on the horizontal centre line thereof,

Figure 3 is a ray diagram illustrating the propagation of light emitted from a point source located at the focus of the reflector shown in Figures 1 and 2, and

Figure 4 shows the light output characteristic obtained from the reflector shown in Figures 1 and 2.

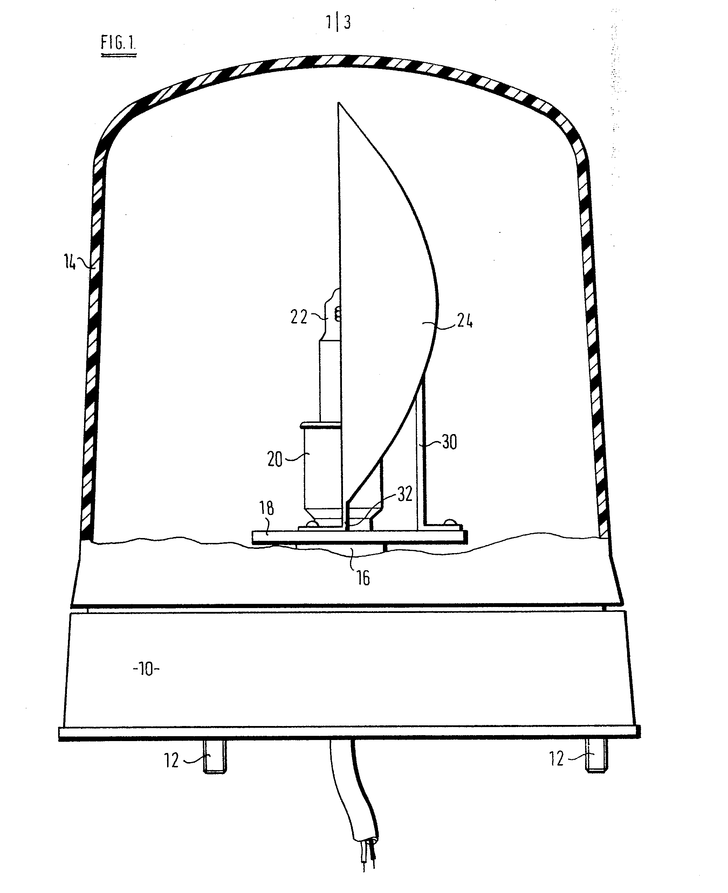

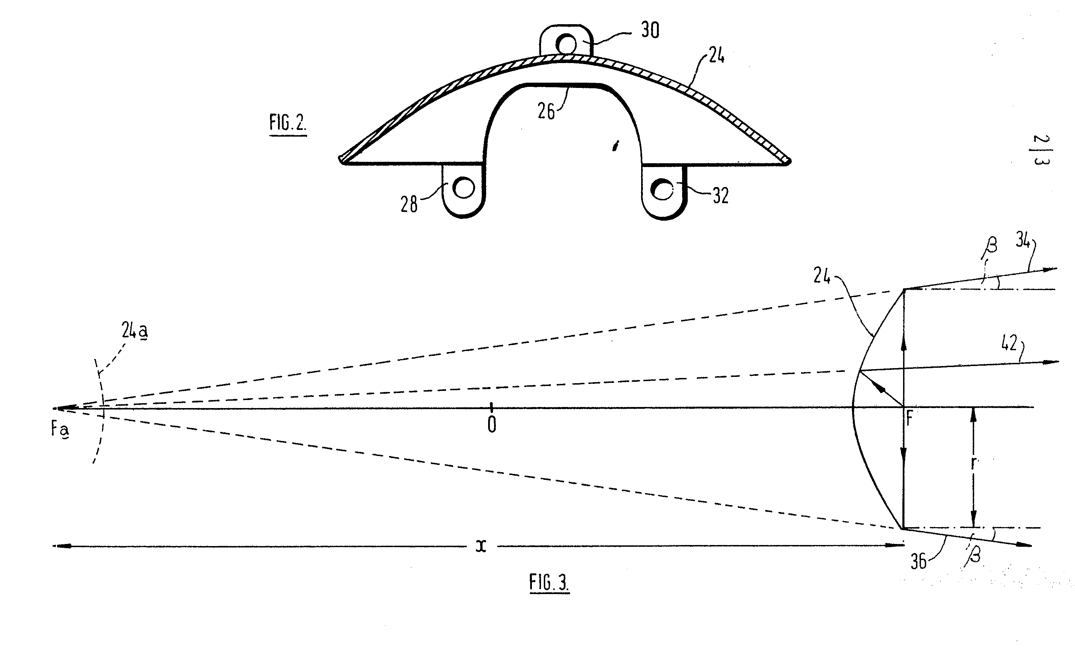

Referring to Figure 1, a beacon comprising a base 10 adabted to be secured to the roof of a motor vehicle by threaded studs 12. Mounted on the base 10 is a translucent cover or dome 14 coloured in accordance with the required colour of the emitted beam of light; blue for emergency service vehicles, green for medical practitioners and amber for other vehicles (in the U.K.). An electric motor (not shown) is mounted within the base 10 and drives a vertical hollow shaft 16 having a platform 18 mounted on its upper end. A lamp holder 20 carrying a bulb 22 is mounted on a bearing shaft (not shown) on which the shaft 16 rotates. A reflector 24 of hyperbolic shape is mounted on the platform 18 so that its focus is coincident with the filament of the bulb 22. Referring also to Figure 2, the reflector 24 has a cut away portion 26 to accommodate the lamp holder 20 and three legs 28, 30 and 32, whereby it is secured to the platform 18.

Figure 3 shows the hyperbolic reflector 24 with its first focus at F, its origin at O and its complementary virtual hyperbolic surface 24a with its second focus at Fa. Light from a point source (such as the bulb 22) located at the focus F of the reflector 24, is incident on the surface thereof. Light incident on the reflector 24 along the optical axis F-O-Fa is reflected along the optical axis. Light which is incident on the periphery of the reflector 24 (which in this embodiment, lies in the focal plane thereof) produces reflected rays, such as the rays 34 and 36 which are inclined at an angle $\beta$ to the optical axis F-O-Fa. Light incident on intermediate parts of the reflector produces reflected rays such as the ray 42 which are inclined at intermediate angles such that the lines of these rays, projected rearwardly through the reflector 24 pass through the second focus Fa. Thus, the reflector 24 produces a diverging beam, the divergence angle $2\beta$ is determined by

$$\tan \beta = \frac{r}{x}$$

where r is the radius of the periphery of the reflector and x is the distance between the second focus and the point at which the optical axis intersects the plane of such periphery (which, in the embodiment illustrated, has been chosen to be the first focus F).

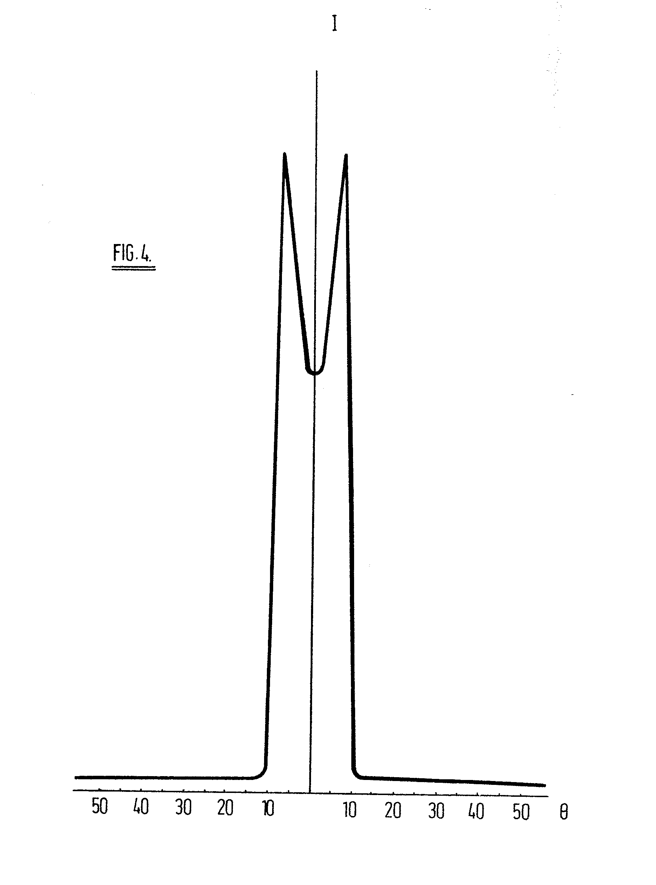

A reflector of 111.76mm diameter and 26.11mm focal length produces a beam having a divergence angle $(2\beta)$ of $15^{\circ}$. The light output characteristic from this reflector is shown in Figure 4, from which it will be seen that the maximum light intensity is produced at the edges of the beam with a reduced level of intensity on the beam axis, the beam width $2\beta$ being defined as the angle between the two peaks. However, since the frequency of rotation of tge reflector is usually about 3 Hz, the time interval between incidence of the two peaks of the beam on an observer's eye is only about 14 milliseconds. Consequently the beam is perceived as having a single peak.

- 5 -

0084923

## CLAIMS

1.      A beacon having a reflector (24) mounted, with its optical axis horizontal, on means (16) for rotating it about a vertical axis, and a lamp bulb (22) mounted with its light source on said optical axis, characterised in that the reflector (24) is of hyperbolic shape with the light source of the bulb (22) located at the first focus thereof.

2.      A beacon according to claim 1, characterised in that the focal length of the reflector is chosen so that

$$\tan\beta = \frac{r}{x}$$

where r is the radius of the periphery of the reflector, x is the distance between the second focus and the point at which the optical axis intersects the plane of the periphery of the reflector, and $\beta$ is equal to half the angle of divergence of the required beam.

3.      A beacon according to claim 2, characterised in that the periphery of the reflector (24) lies in a plane containing the first focus (F) thereof.

FIG.1.

FIG.2.

30

24

26

28

32

FIG.3.

24a

Fa

0

34

β

24

42

F

r

36

β

x

3|3

I

FIG.4.

50   40   30   20   10      10   20   30   40   50   θ

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 201 442 (ROBERT BOSCH)<br>* Pages 9,10 *<br>--- | 1 | F 21 Q 1/00<br>F 21 V 7/07 |
| A,D | GB-A-1 326 107 (EISENMANN)<br>* Page 2, lines 6-25 *<br>--- | 1 | |
| A | US-A-3 398 272 (ELMER)<br>* Column 2, lines 34-40 *<br>--- | 1 | |
| A | GB-A- 276 220 (HOLOPHANE)<br>* Figure 2 *<br>----- | 1,3 | |

TECHNICAL FIELDS
SEARCHED (Int. Cl. 3)

F 21 Q
F 21 V
F 21 S
G 02 B

The present search report has been drawn up for all claims

| Place of search | Date of completion of the search | Examiner |
|---|---|---|
| THE HAGUE | 15-04-1983 | FOUCRAY R.B.F. |

EPO Form 1503. 03.82